Europäisches Patentamt

European Patent Office

Office européen des brevets

(19)

(11) Veröffentlichungsnummer: **0 101 544**
B1

## (12) EUROPÄISCHE PATENTSCHRIFT

(45) Veröffentlichungstag der Patentschrift:
09.04.86

(21) Anmeldenummer: 83106362.3

(22) Anmeldetag: 30.06.83

(51) Int. Cl.⁴: **B 65 H 18/02, F 16 D 1/10**

(54) Vorrichtung zum Kuppeln eines Wickelstabes mit einer Mitnehmerwelle.

(30) Priorität: 31.07.82 DE 3228739

(43) Veröffentlichungstag der Anmeldung:
29.02.84 Patentblatt 84/9

(45) Bekanntmachung des Hinweises auf die Patenterteilung:
09.04.86 Patentblatt 86/15

(84) Benannte Vertragsstaaten:
AT BE CH FR GB IT LI LU NL SE

(56) Entgegenhaltungen:
DE - A - 2 847 190
DE - A - 2 852 510
DE - A - 2 926 577
DE - A - 2 932 895
DE - B - 1 088 338
DE - C - 917 592

(73) Patentinhaber: Kunz Maschinen- und Apparatebau
GmbH, Im Siegmeer 7, D-7850 Lörrach-Hauingen (DE)

(72) Erfinder: Kunz, Wolfgang, Siegmeer 7,
D-7850 Lörrach-Hauingen (DE)

(74) Vertreter: Schmitt, Hans, Dipl.-Ing. et al,
Dreikönigstrasse 13, D-7800 Freiburg (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gemäß dem Oberbegriff des Patentanspruchs 1 betrifft die Erfindung eine Vorrichtung zum Kuppeln eines Wickelstabes od. dgl. mit einer Mitnehmerwelle bei Wickelmaschinen, wobei der Wickelstab einen koaxialen Kupplungszapfen aufweist, an welchem das Drehmoment der Mitnehmerwelle angreift, und wobei der Kupplungszapfen quer zur Längserstreckung des Wickelstabes in eine mit einer entsprechenden Gegenkontur versehene Kupplungsstelle einsetzbar oder aus ihr aushebbar ist, wobei der Kupplungszapfen wenigstens eine sich zumindest in seiner Längsrichtung erstreckende Abflachung aufweist.

Derartige Vorrichtungen zum Kuppeln sind z. B. bei Klapplagern gemäß DE-C 917 592 oder DE-A-2 932 895 oder auch bei Schiebelagern bekannt. In vorteilhafter Weise kann ein Wickelstab quer zu seiner Längserstreckung in seine Kupplungsstelle eingelegt werden, wonach diese durch Klappen des Handrades oder Verschieben eines Schiebeteiles geschlossen werden. Danach kann in gewünschter Weise das Drehmoment von der Mitnehmerwelle auf den Wickelstab übertragen werden, wobei die erwähnte Abflachung wenigstens einen Teil dieses Drehmomentes aufnehmen kann.

Bei Klapplagern gemäß DE-A-2932 895 sind zwei parallele Abflachungen und insbesondere vierkantförmige Kupplungszapfen üblich. Diese haben den Vorteil, einen guten Form-schluß zu ergeben, so daß die Übertragung des Drehmomentes kein Problem darstellt. Nachteilig ist jedoch die aufwendige Herstellung paralleler Abflachungen oder eines Mehr-oder Vierkantes, die sehr genau in Flucht zu dem runden Wickelstab und auch in Flucht zu der Mitnehmerwelle gearbeitet werden müssen. Eine solche Herstellung ist aufwendig und teuer. Außerdem ist die Rundzentrierung schwierig, die teils von einem Bereich des Handrades, teils von einem Bereich der Mitnehmerwelle geleistet werden muß.

Ein weiteres Problem stellen die erforderlichen relativ großen Toleranzen dar, damit unterschiedlichste Wickelstäbe immer wieder in die Mitnehmer-Kupplung passen, weshalb in der DE-A-2932 895 zusätzliche Dämpfungselemente an den beiden parallelen Abflachungen angreifen.

Auch ist es schwierig, den Kupplungszapfen eines Wickelstabes in eine entsprechende Gegenausnehmung einzulegen, wenn zwei in Einlegerichtung verlaufende parallele Abflachungen mit enger Toleranz vorgesehen sind.

Zwar hat man auch schon dreieckförmige Aufnahmen gemacht oder die vierkantförmigen Aufnahmen auf die Spitze gestellt, was das Einlegen erleichtert. Es bleibt jedoch das Problem der aufwendigen Herstellung und bei großen Drehmomenten erhält der Kupplungszapfen die Tendenz aus der Aufnahme zu "klettern".

An sich ist es bekannt, daß runde Wellen einfacher und auch in engeren Toleranzen herstellbar sind. Da jedoch in einem solchen Kupplungsteil eine Umschließung von mehr als einem Halbkreis erwünscht ist, damit der Kupplungszapfen auch eine entsprechende Festigkeit hat, scheidet diese Lösung bisher aus.

Die Erfindung hat sich die Aufgabe gestellt, eine Vorrichtung der eingangs erwähnten Art zu schaffen, bei der ein Kupplungszapfen bis auf eine Abflachung rund sein kann und innerhalb der Aufnahme um mehr als 180° umschlossen wird.

Gemäß den Merkmalen des Patentanspruchs 1 besteht die Lösung dieser Aufgabe darin, daß die seitliche Erstreckung bzw. Breite der einzigen Abflachung des ursprünglich im Querschnitt kreisförmigen Kupplungszapfens und der dieser Abflachung in Gebrauchsstellung entsprechenden oberen Öffnung der Aufnahme wenigstens der Restdicke des Kupplungszapfens senkrecht zu der Abflachung und durch den Mittelpunkt gemessen entspricht.

Dabei ergibt sich eine Restdicke von etwa vier Fünftel oder weniger des Gesamt-Durchmessers des Kupplungszapfens und ein Umschließungswinkel von 254° oder weniger.

Dadurch ist es nämlich möglich, den Kupplungszapfen mit seiner Abflachung senkrecht zu der Aufnahmeöffnung zu stellen und durch diese hindurch abzusenken und dann nach Eintritt unter die Hinterschneidungen der Aufnahmestelle in die Gebrauchsstellung zu drehen, bei der die Abflachung mit der oberen Öffnung abschließt. An dieser Abflachung kann dann das Handrad und/oder ein Schiebeteil od. dgl. der zu verschließenden Kupplung angreifen und ein Drehmoment übertragen.

Die seitlichen Kanten der Aufnahmeöffnung können dabei gerundet, gebrochen oder zurückversetzt sein und die Aufnahmeöffnung kann somit etwas breiter als die abgeflachte Querschnitts-Länge des Kupplungszapfens sein, so daß dieser mit etwa vertikal zu dieser Öffnung angeordneter Abflachung leicht in die Aufnahmestelle eingesetzt werden kann, obwohl diese Hinterschneidungen bildet, die den Kupplungszapfen in Gebrauchsstellung um mehr als 180° umschließen.

Eine Weiterbildung der Erfindung kann darin bestehen, daß in Drehrichtung gesehen ein Anschlag innerhalb der Aufnahme vorgesehen ist, gegen den der Kupplungszapfen in Drehrichtung zur Anlage kommt, wenn seine Abflachung die Gebrauchsstellung erreicht hat. Dies hat vor allem bei Klapplagern den Vorteil, daß beim Eindrehen des Wickelstabes in seine Kupplungsposition eine sich anschließende Weiterdrehung die Aufnahme und Mitnehmerwelle mitdreht, was zu dem bekannten selbsttätigen Verschließen des Handrades führt.

Der Anschlag kann durch wenigstens einen in den Bereich des Kupplungszapfens gerichteten Vorsprung gebildet sein, der in eine in Umfangsrichtung des Kupplungszapfens verlaufende Nut entsprechender Länge eingreift. Die Nut überdeckt dabei etwa einen

2

Umfangsbereich von 90°, so daß die Welle mit dem Kupplungszapfen um 90° gedreht werden kann, wonach die ursprünglich vertikal eingeführte Abflachung in horizontale Position kommt.

In vorteilhafter Weise kann genausogut wieder ausgekuppelt werden, indem bei geöffnetem Klapplager der Wickel um 90° zurückgedreht und dann nach oben ausgehoben wird.

Der Anschlagvorsprung hat dabei einen weiteren Vorteil, indem er zusammen mit der erwähnten Nut an dem Kupplungszapfen auch in axialer Richtung Kräfte übertragen kann, so daß seitliche Verschiegungen verhindert werden. Wird aber die ganze Vorrichtung auf einen seitlich verschiebbaren Schlitten gesetzt, genügt es, nur eine Seite des Schlittens anzutreiben, um über die erwähnten Seitenkraftverbindungen der Vorsprünge und Nuten auch die gegenüberliegende Seite mitzunehmen.

Besonders vorteilhaft ist es, wenn die Umschließung des runden Kupplungszapfens etwa 250° beträgt, so daß eine etwas größere Öffnung für das Einsetzen entsteht.

Eine Weiterbildung der Erfindung von eigener schutzwürdiger Bedeutung, die an einem im Umfang bis auf eine Abflachung runden Kupplungszapfen möglich ist, kann darin bestehen, daß dieser in Längsrichtung ballig - konvex oder gegebenenfalls konkav - ausgebildet ist. Dadurch können zusätzlich Seitenkräfte übertragen werden und vor allem eine Durchbiegung des Wickelstabes oder Ungenauigkeiten zwischen zwei einander gegenüberliegenden Klapplagern in deren Flucht ohne besondere Vorrichtungen und Maßnahmen ausgeglichen werden. In gewissem Sinn bilden die beiden Kupplungszapfen aufgrund ihrer runden Ausbildung dann so eine Art Kugelgelenke. Die erforderliche Drehmomentübertragung bleibt aber an der Abflachung dennoch erhalten.

Dabei kann auch die Abflachung in Längsrichtung ballig ausgebildet sein und insbesondere kann der Krümmungsradius an dieser Abflachung gleich dem Schwenkradius des Handrades des Klapplagers entsprechen, dessen Innenfläche dann entsprechend konkav geformt ist. Auf diese Weise gleitet das Handrad des Klapplagers besonders leicht in seine Schließposition und dennoch wird in vorteilhafter Weise auch in Richtung der Abflachung eine Anpassung an Ungenauigkeiten von Fluchten der beiden Kupplungen oder auch Durchbiegungen ausgeglichen.

Nachstehend ist die Erfindung mit ihren ihr als wesentlich zugehörenden Einzelheiten anhand der Zeichnung noch näher beschrieben. Es zeigt:

Fig. 1 einen Teillängsschnitt durch ein erfindungsgemäßes Klapplager,

Fig. 2 eine Stirnansicht des Klapplagers mit Absicht auf die Kupplungsstelle mit eingelegtem Kupplungszapfen bei geschlossenem Handrad,

Fig. 3 einen Horizontalschnitt gemäß der Linie III-III in Fig. 2 sowie

Fig. 4 eine Ansicht der Kupplungsausnehmung mit einem darüber befindlichen, für das Einsetzen in die Öff-Onung der Kupplungsaufnahme um 90° gedrehten Kupplungszapfen.

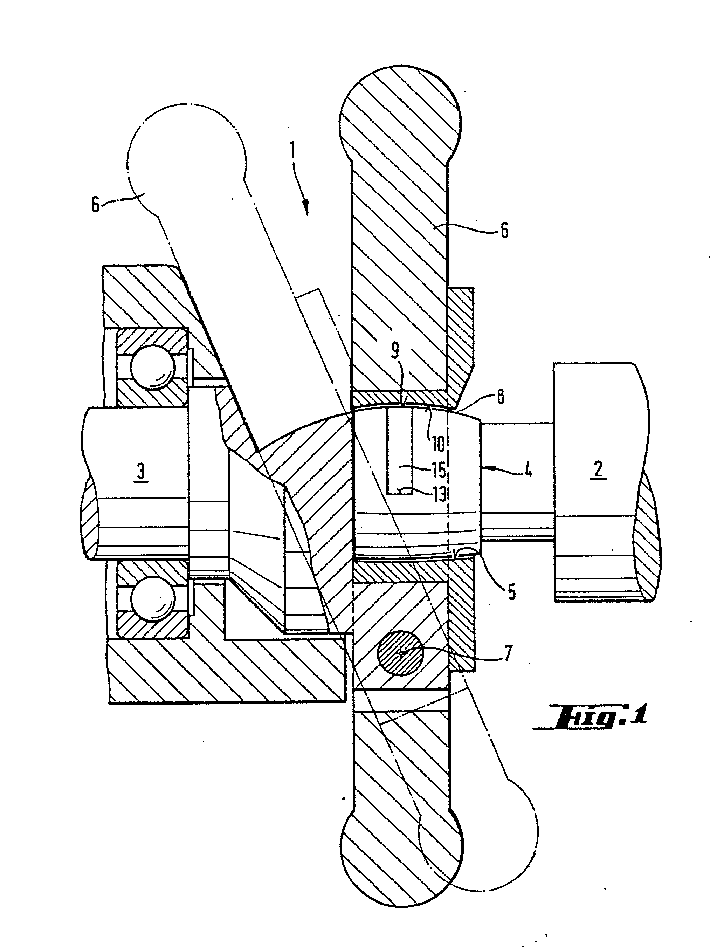

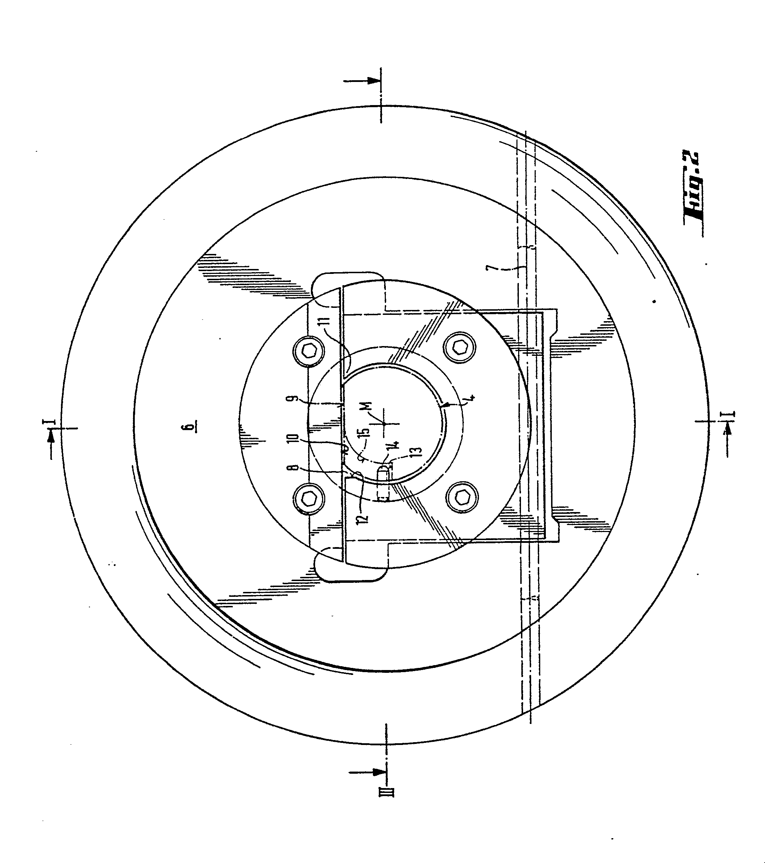

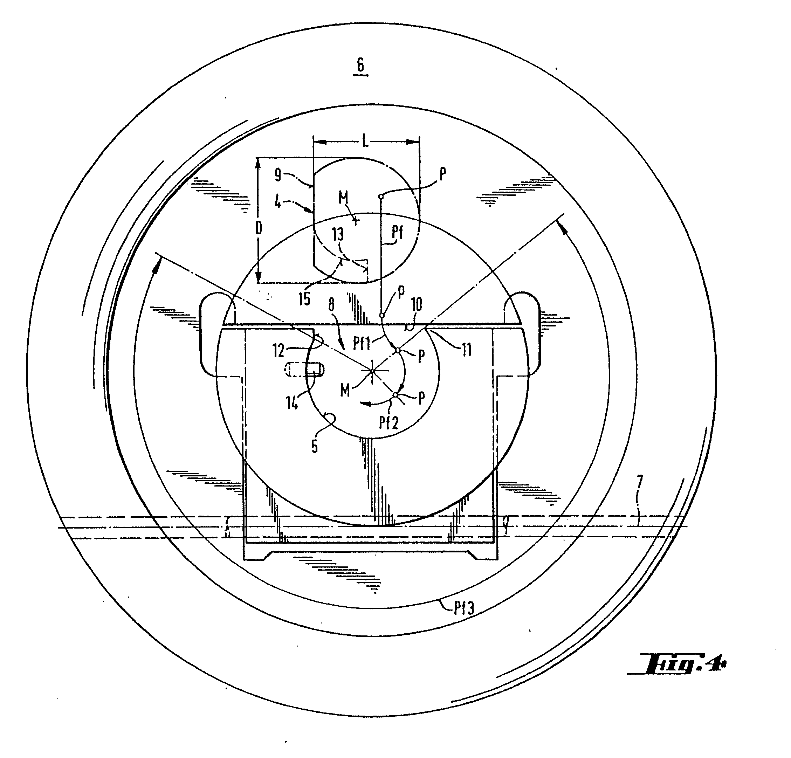

Eine Vorrichtung 1 zum Kuppeln eines Wickelstabes 2 mit einer Mitnehmerwelle 3 ist im Ausführungsbeispiel als Klapplager ausgebildet, wobei ein Kupplungszapfen 4 des Wickelstabes 2 quer zu dessen Längserstreckung in eine mit einer entsprechenden Gegenkontur versehene Kupplungsaufnahme 5 einsetzbar und aus ihr aushebbar ist. Dies kann geschehen, wenn ein Handrad 6 des Klapplagers gegenüber der in Fig. 1 dargestellten Position um dessen Schwenkachse 7 nach links verschwenkt ist, so daß dann die obere Öffnung 8 (vgl. auch Fig. 4) der Kupplungsstelle 5 frei zugänglich ist. Gemäß den Fig. 2 und 4 ist der Kupplungszapfen 4 mit einer Abflachung 9 versehen, die in Gebrauchsstellung praktisch entlang der Öffnung 8 der Aufnahme 5 verlaufen soll, so daß die Innenseite 10 des Handrades 6 in Formschluß mit dieser Abflachung 9 gelangt (vgl. Fig. 2). Dabei ist in vorteilhafter und für die Herstellung besonders günstiger Weise der Kupplungszapfen 4 im übrigen mit einem runden Querschnitt versehen.

Vor allem in Fig. 2 erkennt man, daß die Öffnung 8 der Aufnahme 5 oberhalb deren Mittelachse liegt, so daß der Kupplungszapfen 4 in Gebrauchsstellung um mehr als 180° umschlossen wird. Dennoch soll der Kupplungszapfen 4 von oben her quer zu seiner Längserstreckung in die Öffnung 8 und die Aufnahme 5 eingelegt oder daraus ausgehoben werden können. Dazu ist die seitliche Erstreckung bzw. Breite der Abflachung 9 des Kupplungszapfens 4 und auch die Breite der dieser Abflachung 9 entsprechenden oberen Öffnung 8 der Aufnahme 5 zumindest so groß wie die Restdicke L des Kupplungszapfens 4, gemessen senkrecht zu der Abflachung 9 und durch den Mittelpunkt M dieses Kupplungszapfens 4. Dadurch ist es möglich, den Kupplungszapfen 4 mit seiner Abflachung 9 senkrecht zu der Aufnahmeöffnung 8 gestellt durch diese hindurch abzusenken, wie es in Fig. 4 angedeutet ist. Nach dem Eintritt unter Hinterschneidungen 11 seitlich der Öffnung 8 kann dann der Kupplungszapfen 4 gemäß dem Pfeil Pf 1 etwas nach rechts verschoben werden, bis seine kreisbogenförmige Kontur mit der Innenkontur der Aufnahme 5 in Berührung kommt, wonach der Kupplungszapfen 4 gemäß Pfeil Pf 2 verdreht werden kann, bis die Abflachung 9 parallel zu der Öffnung 8 verläuft. In Fig. 4 ist zur Verdeutlichung ein Punkt P an dem Kupplungszapfen 4 markiert, dessen Weg dann mit den erwähnten Pfeilen verdeutlicht ist. Der Pfeil entsprechend dem ersten Einsetzen in die Aufnahme 5 ist dabei lediglich mit Pf gekennzeichnet.

Der Doppelpfeil Pf 3 verdeutlicht den Umschließungs- oder Umschlingungswinkel, mit dem der Kupplungszapfen 4 in der Aufnahme 5 in Gebrauchsstellung erfaßt und festgehalten wird.

Die Restdicke L des Kupplungszapfens 4 durch den Mittelpunkt M und senkrecht zu der Abflachung 9 ist im Ausführungsbeispiel etwa vier Fünftel des Gesamtdurchmessers D des Kupplungszapfens 4 außerhalb seines abgeflachten Bereiches. Eine größere Restdicke L wäre nicht möglich, weil dann die Abflachung 9 und somit auch die Öffnung 8 zu schmal würden oder bei der jetzt gewählten Öffnung der abgeflachte Bereich oberhalb dieser Öffnung zu liegen käme, also nicht mehr mit deren Rändern fluchten würde. Es ergäben sich dann Schwierigkeiten beim Schließen des Handrades 6 und vor allem beim Einsetzen des Kupplungszapfens 4 in die Aufnahme 5. Es wäre jedoch möglich, die Restdicke L etwas kleiner zu machen, wodurch die Abflachung 9 und auch die Öffnung 5 breiter würden. Dadurch würde aber dann der Umschlingungswinkel gemäß dem Pfeil Pf 3 und vor allem auch der Querschnitt des Kupplungszapfens 4 ebenfalls kleiner.

Eine der seitlichen Kanten 12 der Aufnahmeöffnung 8 ist gebrochen bzw. zurückversetzt, so daß die Aufnahmeöffnung 8 etwas breiter als die Abflachung 9 wird. Entsprechend leichter ist das Einsetzen des Kupplungszapfens 4.

Um beim Einsetzen des Kupplungszapfens 4 möglichst einfach und schnell eine lagegenaue Anordnung der Abflachung 9 in Flucht mit der Öffnung 8 bzw. deren Rändern zu erreichen, ist innerhalb der Aufnahme 5 in Drehrichtung gesehen ein Anschlag in Form eines Vorsprunges 14 vorgesehen, gegen den der Kupplungszapfen 4 in Drehrichtung mit einem entsprechenden Gegenanschlag 13 zur Anlage kommt, wenn seine Abflachung 9 die Gebrauchsstellung erreicht hat. Dies hat vor allem bei einem Klapplager gemäß dem Ausführungsbeispiel den Vorteil, daß beim Eindrehen des Wickelstabes 2 und seines Kupplungszapfens 4 gemäß dem Pfeil Pf 2 in Fig. 4 in seine Kupplungsposition eine sich anschließende Weiterdrehung die Aufnahme 5 und somit die Mitnehmerwelle 3 mitdreht, was zu dem bekannten selbsttätigen Verschließen des Handrades 6 führt.

Im Ausführungsbeispiel ist der Vorsprung 14 durch einen in den Zapfenbereich gerichteten Stift gebildet, der in eine in Umfangsrichtung des Kupplungszapfens 4 verlaufende Nut 15 entsprechender Länge eingreift. Die Nut 15 überdeckt dabei einen Umfangsbereich von 90°, so daß der Wickelstab 2 mit dem Kupplungszapfen 4 um 90° gedreht werden kann, wonach die ursprünglich vertikal eingeführte Abflachung 9 in gewünschter Weise in eine horizontale Position kommt.

Ein Ausheben des Wickelstabes 2 kann in umgekehrter Weise erfolgen, weil der Kupplungszapfen 4 ohne Hindernis entgegen dem pfeil pf 2 um 90° zurückgedreht, entgegen dem Pfeil Pf 1 seitlich versetzt und dann entgegen dem Pfeil Pf ausgehoben werden kann.

Der Vorsprung 14 in Form des Stiftes od. dgl. kann dabei zusammen mit der ihn seitlich umschließenden Nut 15 an dem Kupplungszapfen 4 auch in axialer Richtung des Wickelstabes 2 Kräfte übertragen, so daß seitliche Verschiebungen verhindert werden oder aber bei einem Aufsetzen der gesamten Vorrichtung auf einen seitlich verschiebbaren Support nur eine Seite dieses Supports angetrieben werden muß, um über diese Seitenkraftverbindung zwischen Vorsprüngen 14 und Nuten 15 auch die gegenüberliegende Seite mitnehmen zu können.

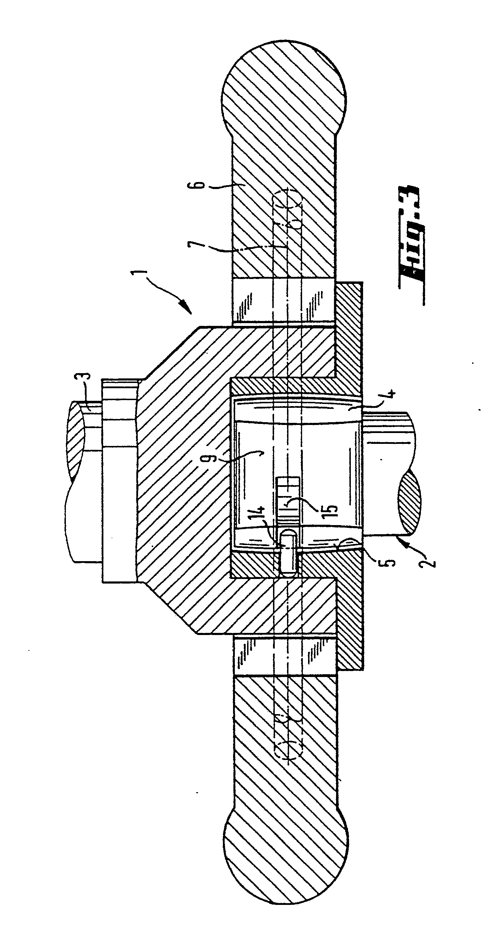

Vor allem in den Fig. 1 und 3 erkennt man noch eine Ausgestaltung der Erfindung von eigener schutzwürdiger Bedeutung, die darin besteht, daß der im Querschnitt runde Kupplungszapfen 4 auch in Längsrichtung ballig - im Ausführungsbeispiel konvex - ausgebildet ist. Dadurch können zusätzlich Seitenkräfte übertragen werden und vor allem auch eine Durchbiegung des Wickelstabes 2 ausgeglichen werden. Ferner können Ungenauigkeiten zwischen zwei einander an einem Wickelstab 2 gegenüberliegenden Klapplagern in deren Flucht ohne besondere Vorrichtungen oder Maßnahmen ausgeglichen werden. Praktisch bilden zwei in der dargestellten Weise ballige Kupplungszapfen 4 eine Art Kugelgelenke, wobei dennoch die erforderliche Drehmomentübertragung an der Abflachung 9 erhalten bleibt.

Gemäß Fig. 1 ist dabei die Abflachung 9 ebenfalls in Längsrichtung ballig, und zwar konvex ausgebildet, wobei der Krümmungsradius an dieser Abflachung dem Schwenkradius des Klapplagers entspricht, dessen Innenfläche 10 dann entsprechend konkav geformt ist. Auf diese Weise gleitet das Handrad des Klapplagers leicht in seine Schließposition, was schon durch die Drehung der Mitnehmerwelle über die Kupplungsposition hinaus selbsttätig erfolgen kann. Somit werden auch in diesem Bereich Durchbiegebewegungen oder Ungenauigkeiten zwischen den gegenüberstehenden Klapplagern einer Mitnehmerwelle 2 ausgeglichen.

Insgesamt ergibt sich eine Kupplungsvorrichtung mit einseitig abgeflachtem Kupplungszapfen 4, der nicht in axialer Richtung in seine Gegenöffnung eingesteckt werden muß, sondern aufgrund der erfindungsgemäßen Anordnungen von oben nach unten quer zu seiner Längserstreckung in die entsprechende Kupplungsaufnahme 5 beispielsweise eines Klapplagers eingesetzt werden kann, wobei er in vorteilhafter Weise einen kreisförmigen Querschnitt haben kann.

**Patentansprüche**

1. Vorrichtung (1) zum Kuppeln eines Wickelstabes (2) od. dgl. mit einer Mitnehmerwelle (3) bei Wickelmaschinen od. dgl., wobei der Wickelstab (2),gegebenenfalls beiseitig, einen koaxialen Kupplungszapfen (4) aufweist, an welchem das Drehmoment der Mitnehmerwelle (3) angreift, und wobei der Kupplungszapfen (4) quer zur Längserstreckung des Wickelstabes (2) in eine mit einer entsprechenden Gegenkontur versehene Kupplungsaufnahme (5) einsetzbar oder aus ihr aushebbar ist, wobei der Kupplungszapfen (4) eine sich zumindest in seiner Längsrichtung erstreckende Abflachung (9) aufweist, dadurch gekennzeichnet, daß die seitliche Erstreckung bzw. Breite der einzigen Abflachung (9) des ursprünglich im Querschnitt kreisförmigen Kupplungszapfens (4) und der dieser Abflachung in Gebrauchsstellung entsprechenden oberen Öffnung (8) der Aufnahme (5) wenigstens der Restdicke (L) des Kupplungszapfens (4) senkrecht zu der Abflachung (9) und durch den Mittelpunkt (M) gemessen entspricht.

2. Vorrichtung nach Anspruch 1, dadurch gekennzeichnet, daß die Restdicke (L) des Kupplungszapfens (4) durch den Mittelpunkt (M) und senkrecht zu der Abflachung (9) etwa vier Fünftel oder weniger des Gesamt-Durchmessers (D) des Kupplungszapfens (4) beträgt.

3. Vorrichtung nach Anspruch 1 oder 2, dadurch gekennzeichnet, daß wenigstens eine der seitlichen Kanten (12) der Aufnahmeöffnung (8) gerundet, gebrochen oder zurückversetzt ist.

4. Vorrichtung insbesondere nach einem der Ansprüche 1 bis 3, dadurch gekennzeichnet, daß in Drehrichtung (Pf 2) des Kupplungszapfens (4) gesehen ein Anschlag (14) innerhalb der Aufnahme (5) vorgesehen ist, gegen den der Kupplungszapfen (4) in Drehrichtung zur Anlage kommt, wenn seine Abflachung (9) die Gebrauchsstellung erreicht hat.

5. Vorrichtung nach Anspruch 4, dadurch gekennzeichnet, daß der Anschlag durch wenigstens einen in den Bereich des Kupplungszapfens (4) gerichteten Vorsprung (14) gebildet ist, der in eine in Umfangsrichtung des Kupplungszapfens (4) verlaufende Nut (15) entsprechender Länge eingreift.

6. Vorrichtung nach Anspruch 5, dadurch gekennzeichnet, daß die Nut (15) einen Umfangsbereich von etwa 90° von der Abflachung (9) ausgehend überdeckt.

7. Vorrichtung nach einem der Ansprüche 1 bis 6, dadurch gekennzeichnet, daß die Umschließung des im Querschnitt kreisbogenförmig begrenzten Kupplungszapfens (4) innerhalb der Kupplungsstelle (5) 254° oder weniger, vorzgsweise 250° beträgt.

8. Vorrichtung nach einem der vorstehenden Ansprüche, dadurch gekennzeichnet, daß der bis auf die Abflachung (9) im Querschnitt runde Kupplungszapfen (4) in Längsrichtung ballig - konvex oder gegebenenfalls konkav - ausgebildet ist.

9. Vorrichtung nach einem der Ansprüche 1 bis 8, dadurch gekennzeichnet, daß die Abflachung (9) des Kupplungszapfens (4) in Längsrichtung ballig ausgebildet ist und der Krümmungsradius der Balligkeit der Abflachung (9) bzw. gleich dem Schwenkradius des Handrades (6) eines Klapplagers an dieser Vorrichtung entspricht, dessen Innenfläche entsprechend konkav geformt ist.

**Revendications**

1) Dispositif (1) pour accoupler une barre enrouleuse (2), ou similaire, à une arbre d'entraînement (3), dans les enrouleurs ou machines similaires, la barre enrouleuse (2) présentant, éventuellement des deux côtés, un tourillon d'accouplement coaxial (4) auquel s'applique le couple de l'arbre d'entraînement (3) et le tourillon d'accouplement (4) pouvant être inséré, transversalement à l'extension longitudinale de la barre enrouleuse (2), dans un logement d'accouplement (5) muni d'un contour complémentaire correspondant ou en être retiré, le tourillon d'accouplement (4) présentant un plat (9) s'étendant au moins dans sa direction longitudinale, caractérisé en ce que l'extension latérale ou largeur du plat unique (9) du tourillon d'accouplement (4) à section primitivement circulaire et de l'ouverture supérieure (8) du logement (5), correspondant à ce plat en position d'utilisation, correspond au moins à l'épaisseur résiduelle (L) du tourillon d'accouplement (4), perpendiculairement au plat (9), mesurée par le centre (M).

2) Dispositif selon la revendication 1, caractérisé en ce que l'épaisseur résiduelle (L) du tourillon d'accouplement (4), par le centre (M) et perpendiculairement au plat (9), représente environ quatre cinquième ou moins du diamétre total (D) du tourillon d'accouplement (4).

3) Dispositif selon l'une des revendications 1 et 2, caractérisé en ce qu'au moins un des bords latéraux (12) de l'ouverture de logement (8) est arrondi, brisé ou en retrait.

4) Dispositif, en particulier selon l'une des revendications 1 à 3, caractérisé en ce que, vue dans le sens de rotation (Pf2) du tourillon d'accouplement (4), à l'intérieur du logement (5) est prévue une butée (14) contre laquelle le tourillon d'accouplement (4) vient s'appliquer dans le sens de rotation quand son plat (9) a atteint la position d'utilisation.

5) Dispositif selon la revendication 4, caractérisé en ce que la butée est formée par au moins une saillie (14) dirigée vers la région du tourillon d'accouplement (4) et qui s'engage dans une gorge (15) de longueur correspondante située dans la direction circonférentielle du tourillon d'accouplement (4).

6) Dispositif selon la revendication 5, caractérisé en ce que la gorge (15) couvre une région circonférentielle d'environ 90°, en partant du plat (9).

7) Dispositif selon l'une des revendications 1 à 6, caractérisé en ce que l'enserrement du tourillon d'accouplement (4) limité en arc de cercle en section, à l'intérieur de l'endroit d'accouplement (5), est de 254° au moins, de préférence de 250.

8) Dispositif selon l'une des revendications précédentes, caractérisé en ce que le tourillon d'accouplement (4), rond en section à l'exception du plat (9) est de forme courbe - convexe ou éventuellement concave - en direction longitudinale.

9) Dispositif selon l'une des revendications 1 à 8, caractérisé en ce que le plat (9) du tourillon d'accouplement (4) est de forme courbe en direction longitudinale et que le rayon de courbure de la forme courbe du plat (9) correspond au rayon de pivotement du volant à main (6) d'un palier à pliage de ce dispositif, dont la surface intérieure est de forme concave de façon correspondante.

**Claims**

1. A device (1) for coupling a coiling core (2) or the like to a driving shaft (3) in coiling machines or the like, the coiling core (2) having on possibly both sides a coaxial coupling journal (4) acted upon by the torque of the driving shaft (3), the coupling journal (4) being adapted to be inserted into a coupling carrier (5) provided with a corresponding mating contour or to be raised therefrom transversely to the longitudinal direction of the coiling core (2), the coupling journal (4) having a flattening (9) extending at least in its longitudinal direction, characterized in that the lateral dimension or width of the single flattening (9) of the coupling journal (4) originally circular in cross-section and the upper opening (8) of carrier (5) corresponding to said flattening in the operating position corresponds to at least the residual thickness (L) of the coupling journal (4) measured at right angles to the flattening (9) and through the midpoint (M).

2. The device as claimed in claim 1, characterized in that the residual thickness (L) of the coupling journal (4) through the midpoint (M) and at right angles to the flattening (9) is about four-fifths or less of the total diameter (D) of the coupling journal (4).

3. The device as claimed in claim 1 or claim 2, characterized in that at least one of the side edges (12) of the receiving opening (8) is rounded, chamfered or staggered.

4. The device as claimed in particular in any one of claims 1 to 3, characterized in that, seen in the direction of rotation (arrow 2) of the coupling journal (4), there is provided within the carrier (5) a stop (14) against which the coupling journal (4) comes to rest in the direction of rotation, when the flattening (9) thereof has reached the operating position.

5. The device as claimed in claim 4, characterized in that the stop is formed by at least one projection (14) which is directed into the region of the coupling journal (4) and engages into a groove (15) of corresponding length extending in the peripheral direction of the coupling journal (4).

6. The device as claimed in claim 5, characterized in that the groove (15) covers a peripheral area of about 90° starting from the flattening (9).

7. The device as claimed in any one of claims 1 to 6, characterized in that the encirclement of the coupling journal (4), which in cross-section is defined in the shape of a circular arc, is 254° or less, preferably 250°, within the coupling area (5).

8. The device as claimed in any one of the preceding claims characterized in that the coupling journal (4) which is round in cross-section, except for flattening (9), is spherical - convex or optionally concave - in the longitudinal direction

9. The device as claimed in any one of claims 1 to 8, characterized in that the flattening (9) of the coupling journal (4) takes a spherical form in the longitudinal direction and the radius of curvature corresponds to the spherical form of the flattening (9) or equals the swivel radius of the handwheel (6) of a tilting bearing provided on said device, the inner face of said bearing being of corresponding concave shape.

**Fig.1**

Fig.2

Fig.3

0 101 544

Fig. 4